# EUROPÄISCHE PATENTSCHRIFT

(11) **EP 3 107 800 B1**
(45) Veröffentlichungstag und Bekanntmachung des Hinweises auf die Patenterteilung: **24.01.2018**
(21) Anmeldenummer: 15704226.8
(22) Anmeldetag: 28.01.2015
(51) Int. Cl.: B62J 9/02, B25H 3/02, B62J 9/00, B60R 11/06, B62J 99/00

(54) **ANORDNUNG ZUM SICHERN VON BORDWERKZEUG**
ARRANGEMENT FOR SECURING VEHICLE TOOLS
ENSEMBLE SERVANT À FIXER UN OUTIL DE BORD

(30) Priorität: 20.02.2014 DE 102014203111
(43) Veröffentlichungstag der Anmeldung: 28.12.2016
(73) Patentinhaber: Bayerische Motoren Werke Aktiengesellschaft, 80809 München (DE)
(72) Erfinder: WOLFMUELLER, Hans, 85435 Erding (DE); WAMSER, Rainer, 82275 Emmering (DE)
(86) Internationale Anmeldenummer: PCT/EP2015/051639
(87) Internationale Veröffentlichungsnummer: WO 2015/124390

(56) Entgegenhaltungen:
- WO-A2-2012/015826
- US-A- 4 226 347
- US-A1- 2005 092 797
- US-A1- 2009 152 313
- US-B1- 7 708 097

## Beschreibung

Die Erfindung betrifft eine Anordnung zur Aufnahme von Bordwerkzeugen, sowie einem Sitz für ein Kraftrad, wie zum Beispiel ein Motorradsitz mit einer solchen Aufnahme.

Im Stand der Technik existieren diverse Lösungen, um Reparaturwerkzeug oder Bordwerkzeug in einem Fahrzeug sicher und zugänglich zu verstauen. Dabei treten bei Motorädern, Zweirädern und Motorroller gegenüber den geräumigen Personenkraftwagen und LKW's besondere Probleme auf.

Aus der DE 3101161 A1 ist zum Beispiel eine Werkzeug- oder Instrumententasche, die an der Innenseite des Kofferraumdeckels eines Kraftfahrzeuges angebracht ist, bekannt. Die Anordnung ist derart, dass der die Werkzeuge oder Instrumente aufnehmende Teil der Tasche bei hochgeschwenktem Kofferraumdeckel an diesem nach unten bis in eine waagerechte Lage, klappbar angelenkt ist, während der andere Teil der Tasche vom Kofferraumdeckel selbst gebildet oder an diesem mit dem erstgenannten Teil als Ganzes abnehmbar befestigt ist. Eine solche Ausführung lässt sich jedoch nicht auf Motorräder oder Motorroller sinnvoll übertragen.

Aus der DE 10159719 A1 ist eine Anordnung von Bordwerkzeug und/oder eines Wagenhebers in einem Fahrzeug bekannt, wobei die Anordnung einen Aufnahmebehälter umfasst, in dem Bordwerkzeug eingebracht werden können, und wobei der Aufnahmebehälter mit geeigneten Befestigungsmitteln im Innenraum des Kraftfahrzeugs angebracht werden kann und wobei weiterhin der Aufnahmebehälter im Bereich einer Seitenwandverkleidung der Innenseite des Kraftfahrzeuges befestigt werden kann. Vergleichbare Lösungen sind auch im Bereich von Zweirad-Krafträdern bekannt, bei denen in einem Staufach ein Aufnahmebehälter für Bordwerkzeuge untergebracht ist.

Aus der EP 0 838 373 A2 ist eine weitere Ausführung eines Aufnahmebehälters für Bordwerkzeug bekannt, wobei dieser Aufnahmebehälter auf dem Boden des Kraftfahrzeugs festgeschraubt werden kann. Solche Ausführungen lassen sich nicht auf ein Motorrad oder einen Roller übertragen. Ferner bringen solche Behälter und Aufnahmetaschen diverse Nachteile mit sich. Ferner sind Werkzeughalterungen für Fahrzeuge aus der US 4,226,347 A sowie der US 2005/0092797 A1 bekannt. US4226347 A beschreibt eine Anordnung für ein Fahrrad, zur Aufnahme von Bordwerkzeugen, wobei die Anordnung einen Werkzeugträger aus einem elastisch verformbaren Material ausbildet, der mehrere Kavitäten mit jeweils einer Einstecköffnung zum Einschieben eines Abschnittes eines Bordwerkzeuges in einen Aufnahmeraum der Kavität verfügt und wobei die Kavitäten aufgrund ihrer elastizität von einer Lagerungsposition in eine Einsteck- bzw. Entnahmeposition bewegt werden können. Als nachteilig bei einer derartigen Anordnung erweist sich, dass sich die Herausnahme des Bordwerkzeugs für den Benutzer als unbequem erweist und teilweise erst Abdeckungen oder Halterungen entfernt werden müssen. Wird das Werkzeug später wieder in die Tasche eingeräumt, lässt es sich selten in den Auslieferungszustand zurückpacken, so dass es dann nicht mehr in die Aufnahme passt.

Als alternative Lösungen werden hierzu Haltevorrichtungen in Staufächern vorgesehen, in die einzelne Werkzeuge mittels Gummiringen, Spanngummis oder Clips befestigt werden. Spanngummis sind jedoch unhandlich und es müssen häufig mehrere Werkzeuge gleichzeitig entnommen werden, die von einem gemeinsamen Spanngummi gehalten werden. Ferner können die Werkzeuge während der Fahrt gegen die Staufachwände klappern, was zu störenden Geräuschen während der Fahrt führt. Plastikclips ermüden und brechen teilweisenach Alterungserscheinungen, so dass die Werkzeuge überhaupt nicht mehr befestigbar sind.

Die Aufgabe der vorliegenden Erfindung besteht darin vorbesagte Nachteile zu überwinden und eine Vorrichtung der eingangs beschriebenen Gattung zu schaffen, durch die Bordwerkzeuge in einem Motorrad, Motorroller oder dergleichen sicher gehalten werden, bequem zugänglich sind und darüber hinaus die hohen Kräfte, die infolge der Fahrdynamik auftreten, abzufangen.

Diese Aufgabe wird durch eine Anordnung mit den Merkmalen des Anspruchs 1 und einem Sitz für ein Kraftrad, wie zum Beispiel einem Motorrad gemäß Anspruch 9 gelöst.

Der Grundgedanke der vorliegenden Erfindung besteht darin, dass eine Anordnung aus einem elastischen bis hochelastischen Werkzeugträger gebildet wird, der eine Anzahl aus dem Werkzeugträger hervorstehenden und vorzugsweise einstückig mit diesem ausgebildeten Kavitäten mit taschenartigen Aufnahmeräumen aufweist, die zur Halterung von Bordwerkzeug ausgebildet sind, wobei die Kavitäten paarweise so angeordnet und ausgebildet sind, dass je ein vorzugsweise endseitiger Werkzeugabschnitt in je eine der taschenartigen Aufnahmen der Kavitäten eingeschoben bzw. daraus entnommen werden kann. Beim Einschieben und Entnehmen der Werkzeuge, können die Kavitäten aufgrund ihrer Elastizität von einer Lagerungsposition (Ausgangsposition) in eine Einsteck- bzw. Entnahmeposition (Verschiebeposition) bewegt bzw. elastisch verschoben werden, so dass das jeweils andere Ende des Bordwerkzeuges aus der taschenartigen Aufnahme herausrutsch bzw. daraus entnommen werden kann.

Erfindungsgemäß wird daher Anordnung für einen Kraftradsitz zur Aufnahme von Bordwerkzeugen und dergleichen vorgeschlagen, wobei die Anordnung einen Werkzeugträger aus wenigstens einem elastisch verformbaren Material ausbildet, der mehrere Kavitäten mit jeweils einer Einstecköffnung zum Einschieben eines Abschnittes eines Bordwerkzeuges in einen Aufnahmeraum der Kavität verfügt und wobei die Kavitäten aufgrund ihrer Elastizität von einer Lagerungsposition (Ausgangsposition) in eine Einsteck- bzw. Entnahmeposition (Verschiebeposition) bewegt werden können.

In einer besonders bevorzugten Ausführungsform der Erfindung werden die Kavitäten einstückig und aus einem Material mit dem Werkzeugträger ausgebildet.

In einer weiter bevorzugten Ausführungsform der Erfindung ist das Material des Werkzeugträgers und damit der Kavitäten aus einem Formschaum gebildet, vorzugsweise aus einem weichen elastischen Integralschaum oder einem hochelastischen oder viskoelastischen PUR-Schaum. Andere elastische Schaummaterialien sind ebenfalls denkbar, soweit sich diese aufgrund ihrer Elastizität von einer Lagerungsposition (Ausgangsposition) in eine Einsteck- bzw. Entnahmeposition (Verschiebeposition) für die Werkzeuge elastisch hin- und herbewegen lassen.

Es ist besonders vorteilhaft, wenn für ein oder mehrere der Bordwerkzeuge je ein Kavitäten-Paar aus zwei zueinander beabstandeten Kavitäten vorgesehen sind, wobei die Paare so zueinander angeordnet sind, dass deren Einstecköffnungen in einem Winkel zwischen 0° und 90° zueinander orientiert sind. Anders ausgedrückt bedeutet dies, dass der Abstand der paarweise angeordneten Kavitäten und die Lage der Einstecköffnungen auf die Werkzeuglänge und Werkzeugform abgestimmt ist. Besonders bevorzugt ist es, wenn sich die Enden der Werkzeuge gegen eine oder mehrere Innenwandabschnitte in den Kavitäten abstützt. Auf diese Weise können fahrdynamsiche Kräfte in die enstprechenden Richtungen abgefangen werden.

In einer besonders bevorzugten Ausbildung der Erfindung stehen die Kavitäten auf der Bestückungs- und Entnahmeseite der Anordnung als topfartige Erhebungen aus der Oberfläche des Werkzeugträgers, vorzugsweise in die gleiche Raumrichtung hervorstehen.

So können die hervorstehenden Kavitäten beispielsweise als quaderförmig, zylinderförmig oder teilzylinderförmig Erhebungen auf der Bestückungs- und Entnahmeseite der Anordnung ausgebildet sein und jeweils einen Umfangsabschnitt und einen Bodenabschnitt ausbilden. Der Bodenabschnitt der Kavität bildet auf der Bestückungs- und Entnahmeseite der Anordnung einen Halteabschnitt für die Werkzeuge, um diese bei fahrdynamischen Beschleunigungen und zum Beispiel bei Fahrten durch Mulden in eine Richtung senkrecht zur Fahrtrichtung zu halten. Bewegungen in und entgegen der Fahrtrichtung, sowie Seitenbewegungen werden durch von Seitenwänden gebildeten Umfangsabschnitten abgefangen.

Mit Vorteil sind eine oder mehrere der Einstecköffnungen entlang des jeweiligen Umfangsabschnitts der Kavität in einem Bereich von mehr als 20%, vorzugsweise in einem Bereich zwischen 40% - 60% des gesamten Umfangs in dieser Umfangrichtung ausgebildet ist. So kann zum Beispiel bei einer quaderförmigen Kavität, die vier den Umfang bildende Seitenwände aufweist die Einstecköffnung entlang von zwei benachbarten Seitenwänden ausgebildet werden (was einem Umfangsabschnitt von etwa 50% entspricht. Die hierzu beabstandete ein Kavitätenpaar bildende quaderförmige Kavität, kann eine Einstecköffnung nur entlang einer Seitenwand bilden, was einem Umfangsbereich von ca. 25% entspricht. Auf diese Weise können die Werkzeuge einfacher aus den taschenartigen Aufnahmen seitlich entnommen werden.

In einer weiter bevorzugten Ausführungsform der Erfindung sind ein oder mehrere Bordwerkzeuge in die Anordnung eingesetzt, wobei die eingesetzten Bordwerkzeuge mit wenigstens einem, vorzugsweise beiden endseitigen Werkzeugabschnitten in je eine taschenartige Aufnahme durch die entsprechende Einstecköffnung der jeweiligen Kavität eingesteckt sind und von dem den Werkzeugabschnitt umgebenen elastischen Material fixiert werden.

Ein weitere Aspekt der vorliegenden Erfindung betrifft einen Sitz für ein Motorrad, Kraftrad oder dergleichen, wobei der Sitz gegenüber der Sitzfläche an seiner Unterseite mit einer Sitzschale versehen ist, in der eine wie oben beschriebene Anordnung zur Aufnahme von Bordwerkzeugen aufgenommen ist. Die Anordnung ist dabei so in der Sitzschale aufgenommen, dass die Bestückungs- und Entnahmeseite für die Werkzeuge auf der Unterseite d.h. der Sitzfäche abgewandten Seite angeordnet ist. Bei einem klappbaren Sitz kann der Sitz so aus seiner normalerweise geschlossenen Position aufgeklappt werden, so dass die Werkzeuge zugänglich sind.

Erfindungsgemäß weist die Anordnung fernerjeweils ein Paar aus zwei zueinander beabstandeten Kavitäten für die Bordwerkzeuge auf, deren Einstecköffnungen in einem Winkel zwischen 0° und 90° zueinander orientiert sind und die Orientierung der Paare der Kavitäten in Sitzlängsrichtung des Sitzes ausgeführt ist. Anders ausgedrückt, sind die Einstecköffnungen an sich zugewandten Seitenwandabschnitten der Kavitätenpaare vorgesehen, oder an um einen Winkel von ca. 90 Grad versetzten Seitenwandabschnitten.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig.1: eine Unteransicht eines Motorradsitzes mit einem Ausführungsbeispiel einer erfindungsgemäßen Anordnung zur Aufnahme von mehreren Bordwerkzeugen, sowie zwei vergrößerte Details.
- Fig.2: eine geschnittene Seitenansicht durch den Sitz gemäß Figur 1.

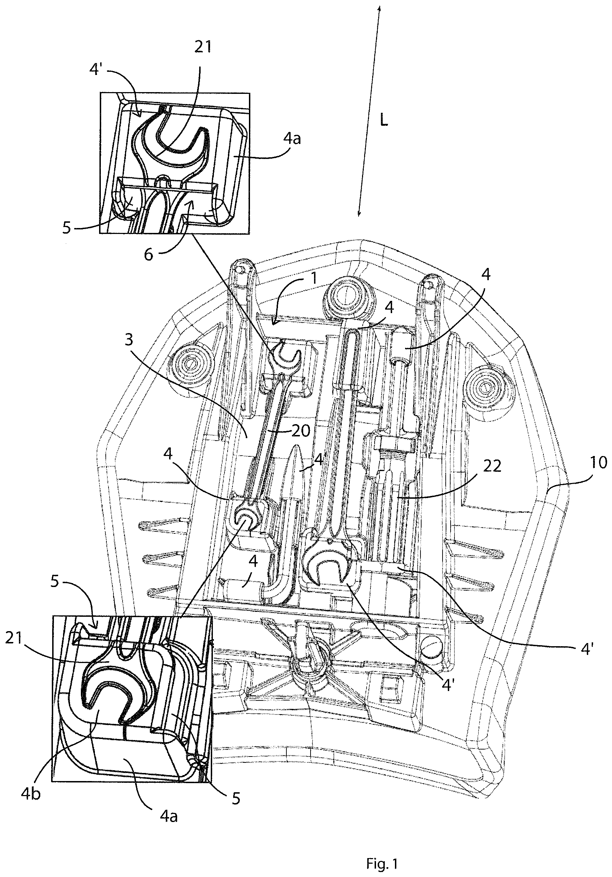

In der Figur 1 ist eine Unteransicht eines Motorradsitzes 10 mit einer erfindungsgemäßen Anordnung 1 zur Aufnahme von mehreren Bordwerkzeugen 20 gezeigt.

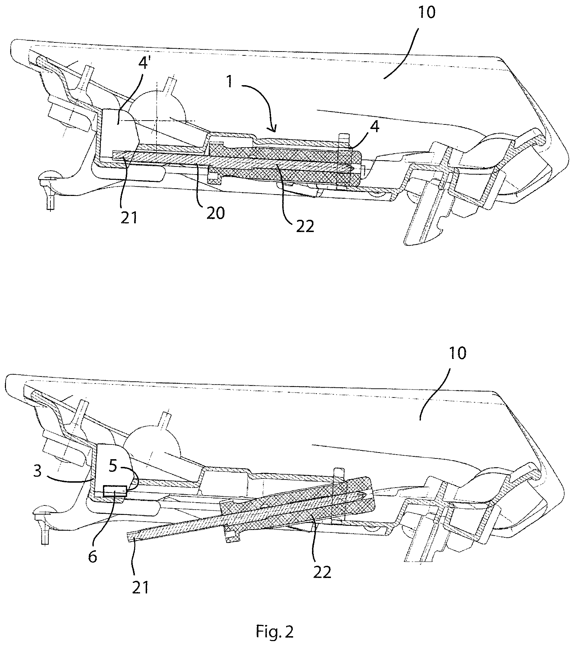

Die Anordnung 1 umfasst einen Werkzeugträger 3 aus wenigstens einem elastisch verformbaren Material, der mehrere Kavitäten 4, 4' mit jeweils einer Einstecköffnung 5 zum Einschieben eines Abschnittes 21 eines Bordwerkzeuges 20 in den Aufnahmeraum 6 der Kavität 4, 4' aufweist. Die Kavitäten 4, 4' können wie in der Figur 2 gezeigt, aufgrund ihrer Elastizität von einer Lagerungsposition (obere Ansicht der Figur 2) in eine Einsteck- bzw. Entnahmeposition (untere Ansicht der Figur 2) bewegt werden.

In der Figur 2 ist eine Seitenansicht eines zwischen zwei Kavitäten gelagerten Schraubendrehers 20 dargestellt, wobei die rechte Kavität 4 mittels Druck auf den Schraubendreher 20 über dessen Griff 22 so verformt wird, dass der dem Griff 22 gegenüberliegende Werkzeugabschnitt 21 aus der Kavität 4' heraus bewegt werden kann.

Die Kavitäten 4, 4' sind hier einstückig mit dem Werkzeugträger 3 ausgeformt sind und einem hochelastischen Formschaum gebildet. Es ist weiter in Figur 1 zu erkennen, dass die vier beispielhaften Bordwerkzeuge 20 von je einem Kavitäten-Paar aus zwei zueinander beabstandeten Kavitäten 4, 4' gehalten werden, wobei die Paare so zueinander angeordnet sind, dass deren Einstecköffnungen 5 in einem Winkel von 0° bzw. 90° zueinander orientiert sind. Der Imbusschlüssel ist zum Beispiel mit seinen Enden in Einstecköffnungen 5 von Kavitäten 4; 4' eingeführt, wobei die Einstecköffnungen aufgrund der Abwinkelung des Imbusschlüssels (Winkelschlüssel) in einem Winkel von 90° zueinander orientiert sind.

Weiter ersichtlich ist, dass die Kavitäten 4, 4' auf der Bestückungs- und Entnahmeseite der Anordnung 1 als topfartige Erhebungen aus der Oberfläche herausstehen und zwar als Erhebungen, die entweder eine quaderförmige oder zylinderförmig bzw. teilzylinderförmige Hüllform ausbilden. Die Erhebungen weisen einen Umfangsabschnitt 4a und einen Bodenabschnitt 4b auf.

Die Einstecköffnung 5 in der unteren Kavität 4 des ganz links in Figur 1 gezeigten Maulschlüssels 20 ist entlang seines oberen und rechten Umfangsabschnitts 4a in die Kavität eingeformt, somit in etwa in einem Bereich von 50% des gesamten Umfangabschnittes des durch die vier Seitenwände gebildeten gesamten Umfangs dieser Kavität 4.

Weiter erkennbar ist, dass jedes Paar aus zwei zueinander beabstandeten Kavitäten 4, 4' in Sitzlängsrichtung L ausgerichtet bzw. entlang einer gedachten Sitzlängsachse angeordnet sind. Die eingesetzten Bordwerkzeuge 20 sind mit ihren beiden endseitigen Werkzeugabschnitten 21 in je einen Aufnahmeraum 6 einer Einstecköffnung 5 einer Kavität 4, 4' eines Kavitäten-Paars eingesteckt und werden von dem den Werkzeugabschnitt 21 umgebenen elastischen Material der Kavität 4, 4' fixiert. Auf diese Weise ist die Orientierung der Werkzeuge mit ihrer Längserstreckung vorzugsweise in etwa parallel zur Längsachse L des Sitzes.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Anordnung (1) für einen Kraftfahrsitz zur Aufnahme von Bordwerkzeugen (20) und dergleichen, wobei die Anordnung (1) einen Werkzeugträger (3) aus wenigstens einem elastisch verformbaren Material ausbildet, der mehrere Kavitäten (4, 4') mit jeweils einer Einstecköffnung zum Einschieben eines Abschnittes (21) eines Bordwerkzeuges (20) in einen Aufnahmeraum (6) der Kavität verfügt, die Kavitäten (4, 4') aufgrund ihrer Elastizität von einer Lagerungsposition (Ausgangsposition) in eine Einsteck- bzw. Entnahmeposition (Verschiebeposition) bewegt werden können und wobei für mehrere der Bordwerkzeuge (20) jeweils ein Paar aus zwei zueinander beabstandeten Kavitäten (4, 4') vorgesehen ist, deren Einstecköffnungen (5) in einem Winkel zwischen 0° und 90° zueinander orientiert sind und die Orientierung der Paare der Kavitäten (4, 4') in Sitzlängsrichtung (L) ausgeführt ist..

2. Anordnung nach Anspruch 1, **dadurch gekennzeichnet, dass** die Kavitäten (4, 4') einstückig mit dem Werkzeugträger (3) ausgeformt sind.

3. Anordnung nach Anspruch 1 oder 2, **dadurch gekennzeichnet, dass** das Material der Werkzeugträger (3) und der Kavitäten (4, 4') aus einem Formschaum gebildet sind, vorzugsweise aus einem weichen Integralschaum oder einem hochelastischen oder viskoelastischen PUR-Schaum.

4. Anordnung nach einem der vorhergehenden Ansprüche 1 - 3, **dadurch gekennzeichnet, dass** für ein oder mehrere der Bordwerkzeuge je ein Kavitäten-Paar aus zwei zueinander beabstandeten Kavitäten (4, 4') vorgesehen sind, wobei die Paare so zueinander angeordnet sind, dass deren Einstecköffnungen (5) in einem Winkel zwischen 0° und 90° zueinander orientiert sind.

5. Anordnung nach einem der vorhergehenden Ansprüche 1 - 4, **dadurch gekennzeichnet, dass** die Kavitäten (4, 4') auf der Bestückungs- und Entnahmeseite der Anordnung (1) als topfartige Erhebungen herausstehen

6. Anordnung nach einem der vorhergehenden Ansprüche, **dadurch gekennzeichnet, dass** die äußere Hüllform der aus dem Werkzeugträger (3) hervorstehenden Kavitäten entweder quaderförmig, zylinderförmig oder teilzylinderförmig ausgebildet ist und einen Umfangsabschnitt (4a) und einen Bodenabschnitt (4b) aufweisen.

7. Anordnung nach Anspruch 6, **dadurch gekennzeichnet, dass** eine oder mehrere der Einstecköffnungen (5) entlang des jeweiligen Umfangsabschnitts (4a) der Kavität (4, 4') in einem Bereich von mehr als 20%, vorzugsweise in einem Bereich zwischen 40% - 60% des gesamten Umfangs in dieser Umfangrichtung ausgebildet ist.

8. Anordnung nach einem der vorhergehenden Ansprüche 1 - 7, umfassend ein oder mehrere Bordwerkzeuge (20), wobei das bzw. die eingesetzten Bordwerkzeuge (20) mit wenigstens einem, vorzugsweise beiden endseitigen Werkzeugabschnitten (21) in je einen Aufnahmeraum (6) einer Einstecköffnung (5) einer Kavität (4, 4') eingesteckt sind und von dem den Werkzeugabschnitt (21) umgebenen elastischen Material der Kavität (4, 4') fixiert werden.

9. Sitz (10) für ein Motorrad, Kraftrad oder dergleichen mit einer Sitzschale (11) in der eine Anordnung (1) zur Aufnahme von Bordwerkzeugen (20) nach einem der Ansprüche 1 - 8 aufgenommen ist.

## Claims

1. An arrangement (1) for a motor vehicle seat for receiving vehicle tools (20) and the like, wherein the arrangement (1) forms a tool carrier (3) made of at least one elastically deformable material which has a plurality of cavities (4, 4') with an insertion opening in each case for inserting a portion (21) of a vehicle tool (20) into a receiving space (6) of the cavity, the cavities (4, 4') can be moved from a storage position (starting position) into an insertion or removal position (displacement position), owing to their elasticity and wherein in each case a pair of two spaced-apart cavities (4, 4') is provided for a plurality of the vehicle tools (20), the insertion openings (5) of which are oriented relative to each other at an angle of between 0° and 90° and the pairs of cavities (4, 4') are oriented in the longitudinal direction of the seat (L).

2. An arrangement according to Claim 1, **characterised in that** the cavities (4, 4') are formed in one piece with the tool carrier (3).

3. An arrangement according to Claim 1 or Claim 2, **characterised in that** the material of the tool carriers (3) and of the cavities (4, 4') are formed from a moulded foam, preferably from a soft integral foam or a highly elastic or viscoelastic PU foam.

4. An arrangement according to one of the preceding Claims 1 - 3, **characterised in that** one pair of cavities in each case consisting of two cavities (4, 4') spaced apart from each other are provided for one or more of the vehicle tools, the pairs being arranged relative to each other such that the insertion openings (5) thereof are oriented at an angle of between 0° and 90° to each other.

5. An arrangement according to one of the preceding Claims 1 - 4, **characterised in that** the cavities (4, 4') protrude as pot-like elevations on the insertion and removal side of the arrangement (1).

6. An arrangement according to one of the preceding claims, **characterised in that** the outer enveloping form of the cavities protruding from the tool carrier (3) is either cuboid, cylindrical or partially cylindrical and have [sic] a peripheral portion (4a) and a base portion (4b).

7. An arrangement according to Claim 6, **characterised in that** one or more of the insertion openings (5) along the respective peripheral portion (4a) of the cavity (4, 4') is [sic] formed in a region of more than 20%, preferably in a region of between 40% - 60%, of the entire periphery in this peripheral direction.

8. An arrangement according to one of the preceding Claims 1 - 7, comprising one or more vehicle tool(s) (20), wherein the inserted vehicle tool(s) (20) is/are inserted with at least one, preferably both, end tool portions (21) into one receiving space (6) of an insertion opening (5) of a cavity (4, 4') in each case, and are fixed by the elastic material of the cavity (4, 4') surrounding the tool portion (21).

9. A seat (10) for a motorcycle, powered two-wheeler or the like with a seat shell (11) in which an arrangement (1) for receiving vehicle tools (20) according to one of Claims 1 - 8 is received.

## Revendications

1. Agencement (1) de siège automobile permettant la réception d'outils embarqués (20) ou similaires, cet agencement (1) formant un support d'outil (3) en au moins un matériau élastiquement déformable qui est équipé de plusieurs cavités (4, 4') ayant chacune une ouverture d'enfichage permettant l'insertion d'un segment (21) d'un outil embarqué (20) dans un volume de réception (6) de la cavité, en raison de leur élasticité, les cavités (4, 4') pouvant être déplacées d'une position de montage (position de départ) dans une position d'enfichage ou de prélèvement (position déplacée en translation), et, pour plusieurs des outils embarqués (20) étant respectivement prévue une paire de deux cavités (4, 4') situées à distance de l'une de l'autre dont les ouvertures d'enfichage (5) sont orientées l'une par rapport à l'autre selon un angle compris entre 0° et 90°, et l'orientation des paires de cavités (4, 4') étant effectuée dans la direction longitudinale (L) du siège.

2. Agencement conforme à la revendication 1,
**caractérisé en ce que**
les cavités (4, 4') sont formées en une seule pièce avec le support d'outil (3).

3. Agencement conforme à la revendication 1 ou 2,
**caractérisé en ce que**
le matériau du support d'outil (3) et des cavités (4, 4') est constitué d'une mousse moulée, de préférence d'une mousse intégrale molle ou d'une mousse de polyuréthane PUR fortement élastique ou viscoélastique.

4. Agencement conforme à l'une des revendications précédentes 1 à 3,
**caractérisé en ce qu'**
il est respectivement prévu, pour un ou plusieurs des outils embarqués une paire de cavités constituée de deux cavités (4, 4') situées à distance l'une de l'autre, les paires étant positionnées l'une par rapport à l'autre de sorte que leurs ouvertures d'enfichage (5) soient orientées l'une par rapport à l'autre selon un angle compris entre 0° et 90°.

5. Agencement conforme à l'une des revendications précédentes 1 à 4,
**caractérisé en ce que**
les cavités (4, 4') dépassent de la face d'équipement ou de prélèvement de l'agencement (1) sous la forme de bossages en forme de pots.

6. Agencement conforme à l'une de revendications précédentes,
**caractérisé en ce que**
l'enveloppe externe des cavités dépassant du support d'outil (3) est en forme de parallélépipède, de cylindre ou de tronçon de cylindre, et comporte un segment périphérique (4a) et un segment de base (4b).

7. Agencement conforme à la revendication 6,
**caractérisé en ce qu'**
au moins l'une des ouvertures d'enfichage (5) est formée le long du segment périphérique (4a) respectif de la cavité (4, 4') sur une zone de plus de 20 %, de préférence sur une zone comprise entre 40 % et 60 % de la totalité de la périphérie dans cette direction périphérique.

8. Agencement conforme à l'une des revendications précédentes, comprenant un ou plusieur(s) outil(s) embarqué(s) (20), cet ou ces outil(s) embarqué(s) (20) mis en oeuvre étant enfiché(s), avec au moins un de préférence les deux segments d'outils (21) d'extrémité dans un volume de réception respectif (6) d'une ouverture d'enfichage (5) d'une cavité (4, 4') et étant fixée(s) par le matériau élastique de la cavité (4, 4') entourant le segment d'outil (21).

9. Siège (10) de moto, de vélomoteur ou similaire équipé d'une coque de siège (11) dans laquelle et logée un agencement (1) de réception d'outils embarqués (20) conforme à l'une des revendications 1 à 8.
